# EUROPEAN PATENT APPLICATION

(11) **EP 3 636 499 A1**
(43) Date of publication of application: **15.04.2020**
(21) Application number: 18200203.0
(22) Date of filing: 12.10.2018
(51) Int. Cl.: B60R 21/2338, B60R 21/239, B60R 21/233

(54) **AIRBAG WITH PASSIVE ADAPTIVE VENT TO REDUCE OUT-OF-POSITION INJURY**

(71) Applicant: Key Safety Systems, Inc., Sterling Heights, MI 48314 (US)
(72) Inventor: HAGEDORN, Sebastian, 65199 Wiesbaden (DE)
(74) Representative: Gislon, Gabriele

(57) **Abstract**

An airbag for restraining an in-position and out-of-position vehicle occupant, the airbag comprising an airbag cushion, at least one passive adaptive vent (4) and at least one tether (2, 3), said cushion (10) has an upper side portion, a lower side portion and a front side portion corresponding to the front panel portion (F) of the airbag, facing the vehicle occupant, in the inflated state, said tether (2,3) is attached to the airbag cushion (10) and to the passive adaptive vent (4), wherein the tether (2) is attached to the airbag cushion (10) by means of a first attachment site (7) to the upper side portion (U) of the airbag cushion (10) and by means of a second attachment site (8) to the lower side portion (L) of the cushion.

## Description

### FIELD OF THE INVENTION

The present invention relates to an airbag that is suitable for restraining a vehicle occupant comprising a passive adaptive vent to reduce out-of-position injury and a safety restraint system comprising said airbag. More particularly, the present invention relates to an air bag inflatable between an instrument panel and a front seat occupant of a vehicle.

### BACKGROUND ART

It is well known to provide an inflatable airbag for restraining a vehicle occupant and to provide one or more vent openings in the walls of the airbag to vent the inflation gas from the interior of the partially or fully inflated airbag into the occupant compartment in function of characteristic variables that are relevant to the protective effect of the airbag such as weight and size of vehicle occupant as well as severity of the accident. It is also well known to employ various flow control devices to control the flow of inflation gas through the vent opening(s).

The known front seat passenger airbags are mounted in airbag modules within the instrument panel, in front of a front seat passenger. In case of an in-position condition, i.e. when a passenger is sitting in a normal upright and forward facing position with their back against the back rest of the vehicle seat, the head and chest of the passenger is spaced apart from the instrument panel and the airbag. In case of an out-of-position (OOP) condition, however, the passenger is leaning forwardly toward the location of the non-inflated airbag and, consequently, there initial distance between the passenger and the instrument panel is less than in an in-position condition, i.e. the head of passenger is close to the instrument panel and to the airbag. In this situation, the occupant's head or body will impact the inflating airbag prior to the airbag becoming fully inflated. The head of an out-of-position passenger, e.g. a child or a baby in a rear facing car seat or an adult, is thus positioned too close to the rapidly inflating airbag cushion that may strike against the head or face of the passenger and the force generated by the expanding airbag results in an increased injury risk for the seat occupant. Therefore, in case of a car accident, an out-of-position occupant is at increased risk of injury. Even low speed impacts can cause disc herniation and fracture of lumbar vertebrae due to the increased forces acting e.g. on the neck and torso.

A further problem is the risk of the OOP passenger hitting the dashboard, i.e. the instrument panel, at the passenger's side, while the airbag expands and inflates above the passenger's head, in the so-called overshoot condition. To prevent a front seat vehicle occupant, particularly if it is unbelted or improperly belted, from contacting the windshield or instrument panel, the passenger airbag needs a lot of power, while for out-of-position conditions a weak airbag is necessary to adequately protect the out-of-position passenger, in particular, in an overshoot situation.

There are known different solutions in the prior art to minimize or avoid injury of an out-of-position passenger by the inflating airbag.

Airbags of a vehicle occupant restraint system with one or more outflow openings through which gas can flow out of the partially or fully inflated airbag in a controlled manner are known from numerous patent literatures, such as US 7,607,690 B2, US 2012/0074677 A1, US 7,261,319 B2, US 2011/0031725 A1, US 2009/0039630 A1 e US 2007/0126219 A1.

US 2009/0039630 A1 discloses an airbag assembly for adaptively venting gas from the inside of an airbag that responds to an occupant's position and vents accordingly to avoid excessive deploying impact. The airbag assembly comprises an airbag membrane, one or more control tethers, a diffuser and closable vent apertures on said airbag membrane. One end of the tether is fixedly attached to the airbag membrane, while the other end of said tether is attached to an unattached side of the aperture cover.

US 7,261,319 B2 discloses an airbag cushion that responds to an in-position as well as out-of-position condition of a vehicle occupant. The airbag cushion deploys towards the occupant and provides a restraint. The airbag comprises one strap (or tether) and a closable vent. The strap is connected at one end to the cushion membrane and at the opposing end to the cover of the closable vent. The strap is coupled to the interior surface of the airbag cushion at a location opposing a face surface that contacts an occupant. In out-of-position conditions, the vehicle occupant obstructs the path of airbag cushion deployment. As the airbag cushion deploys, the face surface contacts the out-of-position occupant and the airbag is unable to fully deploy. Consequently, the strap remains slack and the gas can escape from the airbag through the open vent resulting in a soft airbag cushion with a lower internal pressure with respect to the fully inflated condition of the airbag. This prior art teaches that a closable vent may be used as a variable feature in out-of-position conditions and in normal restraint conditions.

A front seat passenger airbag is known also from WO 2006/121383. A controllable vent and a tether are incorporated in the airbag to control its deployment. The tether has a substantially T shape formed by a first section and a second section. One end of said first section is fixed to a first attachment site on the airbag membrane, while the other opposed end of said first section is fixed to a second attachment site being on the front part of the airbag. One end of the second section of the tether is joined to the first section at a mid-point along the length of said first section and forming an inverted T shape when the airbag is inflated. The other opposed end of the second section of the tether is connected to the closable vent cover. Upon inflation of the airbag, the first attachment site moves to a position where the inflated airbag lies on the instrument panel, thus the first attachment point is adjacent to a predetermined point on the instrument panel. When the first attachment site is at a predetermined distance from the front of the airbag, the first section of the tether is pulled taut by the inflating airbag. The passive vent is closed in function of the distance between the front part of the airbag and the first attachment site being adjacent a predetermined point on the instrument panel.

During the development of a restraint system at the passenger side there is always an aim to provide adequate solutions to prevent injury of in-position as well as out-of-position passengers. To prevent an unbelted passenger from contacting the windshield or instrument panel (or dashboard), the passenger airbag needs a lot of power (e.g. gas pressure), while in out-of-position conditions a weak airbag is necessary to fulfil the targets avoiding damages to the passenger. This problem is usually solved with a dual-stage inflator and a detector for out-of-position conditions. Such a solution is, however, very expensive.

The existing airbag structures mentioned above do not include solutions to prevent an out-of-position passenger in overshoot from contacting the windshield or instrument panel. Most prior art smart vents use the horizontal distance between the vent and the inflated surface of the airbag or of the passenger directed (facing) surface to trigger the closure of the vent. However, these approaches do not provide an efficient protection in case of shooting the bag over an out-of-position passenger's head (head on instrument panel), because the vent will stay open for a long time since the passenger's head is positioned between the airbag and the instrument panel.

### OBJECTS OF THE INVENTION

It is therefore an object of this invention to provide an airbag that is suitable for restraining both an in-position and an out-of-position vehicle occupant with particular reference to an overshoot situation.

An additional aim of this invention is to provide a safety restraint system comprising said airbag, which is suitable for working with a single stage inflator, easy to be manufactured and operates in a simple and efficient way.

### SUMMARY OF THE INVENTION

The above identified aims are achieved by an airbag suitable for restraining a vehicle occupant being in one of an in-position condition, an out-of-position condition and an overshoot situation for the out-of-position condition, as well as by a safety restraint system described below. The preferred embodiments of the airbag are further defined in dependent claims.

In an embodiment, the airbag of the present invention comprises a passive adaptive vent that is controlled in function of the distance between the upper windscreen and the instrument panel occupied by the inflating/inflated airbag cushion, which allows triggering the state of said vent.

In a first aspect, the present invention relates to an airbag comprising an airbag cushion, at least one passive adaptive vent and at least one tether, said cushion has an upper side portion, a lower side portion and a front side portion corresponding to the front panel portion of the airbag, facing the vehicle occupant in the inflated state, said tether is attached to the airbag cushion and to the passive adaptive vent, wherein the tether is attached to the airbag cushion by means of a first attachment site to the upper side portion of the airbag cushion and by means of a second attachment site to the lower side portion of the cushion.

According to a first embodiment of the airbag of the present invention, said at least one tether has a first end portion and an opposing second end portion. Preferably, one of said end portions is connected to the internal surface of the airbag cushion at the first or second attachment site by any means known in the art, e.g. by means of stitches. A loop can be fixed to the internal surface of the airbag cushion at the other attachment site to guide the tether through said loop to the passive vent. Preferably, the second end portion of the tether is connected to the passive adaptive vent.

According to an embodiment, the first attachment site is on the upper side portion of the airbag cushion, while the second attachment site is on the lower side portion of the airbag cushion. In this manner, the closure of the passive vent is triggered by the distance between the first and second attachment sites, i.e. the distance between the upper side portion and the lower side portion of the inflating/inflated airbag cushion. Said distance is called in the present disclosure as a "vertical distance", to distinguish the present invention from the known prior arts wherein the "horizontal distance" triggers the closure of the passive adaptive vent. In fact, one end portion of the tether in the known prior art airbags is fixed to the front panel of the airbag cushion, while the other end portion is fixed to the passive adaptive vent, forming thereby a varying "horizontal distance" during deployment of the prior art airbags.

In an embodiment, the airbag comprises an airbag cushion, at least one passive adaptive vent and at least two tethers, said cushion has an upper side portion, a lower side portion and a front side portion corresponding to the front panel portion of the airbag, facing the vehicle occupant in the inflated state. Each tether has a first and an opposing second end portions, a first tether has a first attachment site on the upper side portion of the airbag cushion and a second attachment site on the lower side of the airbag cushion, wherein the first end portion of a second tether is attached to a site (point) along the length of the first tether and the second end portion of the second tether is attached to a passive adaptive vent, e.g. to the vent cover or vent flap. Thus, the vent is operated, e.g. closed, according to the position of the point where first and second tether are attached to each other, with respect to the vent device.

In this embodiment, the first and second end portions of the first tether is attached to the inside of the airbag cushion membrane forming thereby a first and a second attachment sites, while the first end portion of the second tether is attached to a point along the length of said first tether and the second end portion of another tether (hereinafter called as second tether) is attached to a passive adaptive vent, e.g. vent cover or vent flap. The first attachment site of the first tether is situated on the internal surface of the upper side portion of the airbag, while the second attachment site of the first tether is located on the internal surface of the lower side portion of the airbag cushion.

In a preferred embodiment, the first end portion of the second tether is attached to a passive adaptive vent, e.g. vent cover or vent flap. The second end portion of the second tether is connected to a point along the length of the first tether. Both the first and second end portions of the first tether are fixed to a different attachment site on the inside of the airbag cushion membrane. In particular, the first end portion of the first tether is attached to the inside of the airbag cushion membrane, where the external surface of the inflated airbag cushion is adjacent to or is deployed towards the windshield, whereas the second end portion of the first tether is attached to the inside of the airbag cushion membrane, where the external surface of the inflated airbag cushion is adjacent to or is deployed towards the surface of the instrument panel.

For the sake of clarity, "upper side portion" of the airbag cushion means windshield side of the airbag cushion, while "lower side portion" of the airbag cushion indicates the instrument panel side of the airbag cushion in the present invention. In particular, the upper side portion of the airbag deploys towards the windshield, while the lower side portion deploys towards the instrument panel. In fully deployed condition of the airbag cushion, said upper side portion or a part thereof lies on the windshield, while the lower side portion or a part thereof lies on the instrument panel. The wording "instrument panel" is intended to encompass also a dashboard or instrument panel at the side of the passenger.

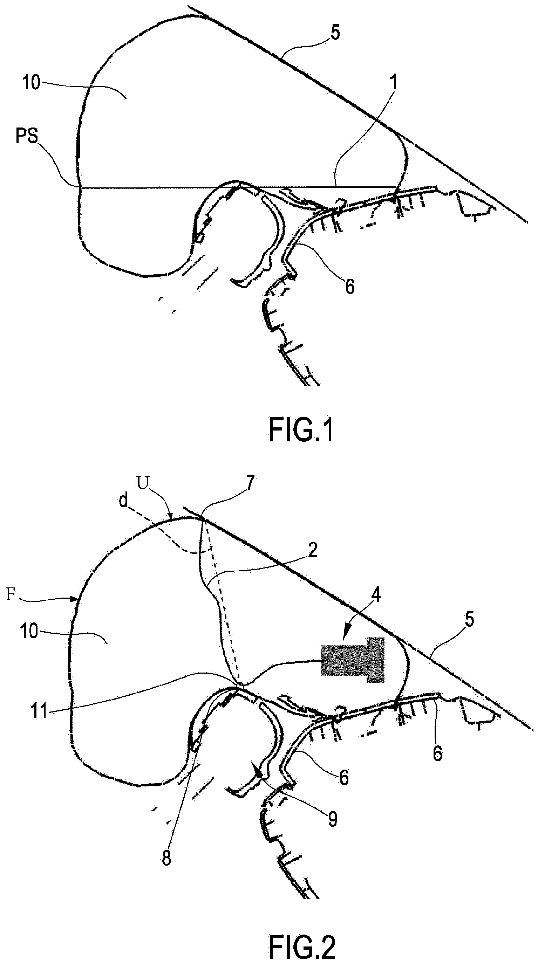

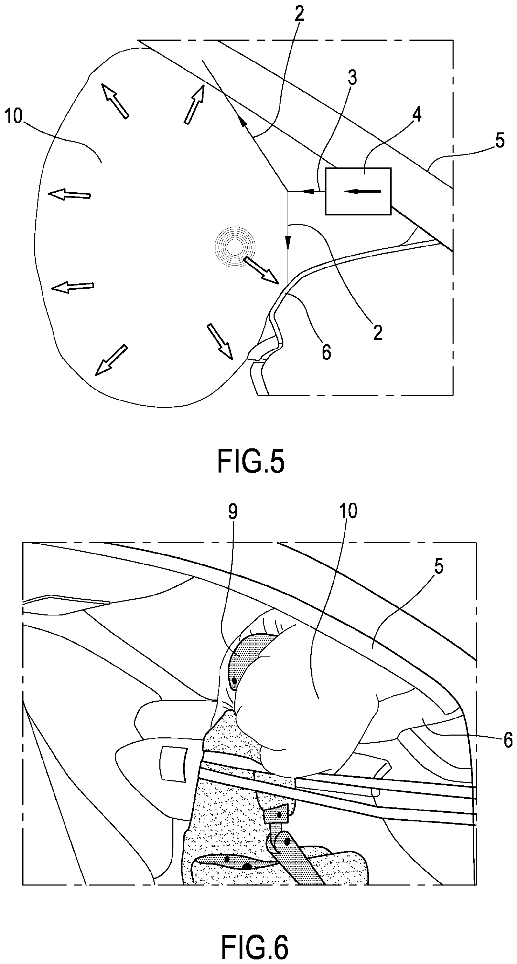

In the context of the present invention the term "overshoot situation" means a situation in which the airbag passes over the head of the passenger, i.e. between the passenger's head and the windshield, to get into deployed state. In other words, as visible in figures 1-3 and 7, in overshooting the airbag is deploying in the space encompassed between the passenger's head and the windshield in the passenger compartment. By contrast, in an usual situation, the airbag deploys in the space between the passenger's body and the instrument panel, as visible in fig. 6.

Any type of passive adaptive vent can be used in the present invention. A particularly useful passive adaptive vent in the present invention is that disclosed in US 2012/153603 A1 owned by Applicant. In this case, the first end portion of the horizontal tether of the airbag of the present invention is attached to the vent flap as disclosed in US 2012/153603. In particular, the passive adaptive vent of US 2012/153603 comprises a vent opening formed in the airbag cushion and a vent cover aligned with said vent opening to form a pocket. The vent cover has at least one vent opening that allows the airbag inflation gas to escape from the airbag cushion via the vent opening in the airbag cushion. A vent flap is disposed at least partially within the pocket and inboard of the vent openings in the airbag cushion. The vent flap can be fixed to a tether so that during deployment of the airbag the vent flap is pulled in a direction by the tether that allows closing the vent openings.

The closure of the passive adaptive vent is triggered by the distance between the first attachment point and the second attachment point of the tether (in case of using only one tether) or of the first tether (in case of using two tethers) of the airbag of the present invention.

In operation, the passive adaptive vent of the airbag of the present invention is open since the activation of the inflator so that the vent aperture is not covered by the vent cover or flap because the tethers are unstressed, so that the inflation gas can stream out of said vent from the airbag cushion. When the airbag cushion is fully deployed, i.e. it reaches its final position, the distance between the attachment sites of the first tether reaches its maximum, and the tether is taut. In this condition, the tightened tether pulls the vent cover (or flap) in a direction that allows closing the adaptive vent openings. In this manner, the required internal pressure for in-position occupant conditions can be applied. In case of an out-of-position condition with head on instrument panel, however, an overshoot situation is created, wherein the airbag of the present invention allows the passive adaptive vent to remain open for a long time since the passenger's head is positioned between the airbag and the instrument panel and the tethers are slack. This kind of triggering the closure of the adaptive vent reduces injury of a passenger in out-of-position condition, especially in an overshoot situation.

According to the invention, when the airbag is fully inflated, i.e. in case of an in-position vehicle occupant, the arrangement of the tether(s) within the airbag cushion and in connection with the passive adaptive vent is such that it results in attachment sites situated on the upper and a lower side portions of the airbag cushion, i.e. on opposite side portions of the airbag cushion. The distance between said attachment sites reaches its maximum when the airbag is fully deployed and the passive adaptive vent will be closed. In case of an obstruction, e.g. in case of an out-of-position occupant, in particular in overshoot situation, however, there is a smaller distance between said attachment sites because the tethers are not under tension and the adaptive vent remains open.

In an embodiment, the upper attachment site of the tether (or first tether, in case of using at least two tethers) lies on the inside of the airbag cushion membrane where it is deployed toward the windshield, while the lower attachment site's location on the inside of the cushion membrane corresponds to a point of the airbag cushion that is adjacent to the instrument panel.

The tether between the first and second attachment sites of the fully inflated airbag, or a line connecting the first and second points (i.e. sites) of attachment between tether and airbag, may lie in a plane that is substantially perpendicular to the ideal plane in which the front panel moves during inflation. Said plane of the tether may be inclined with respect to the vertical plane (vertical with respect to the said ideal plane wherein the front panel moves during inflation) by an angle comprised between +/- 30°, preferably between +/- 25°, most preferably between +/-15°. The ideal plane may be a plane horizontal, as referred to the vehicle on which the airbag is mounted.

The tether between the second attachment site and the attachment point to the passive adaptive vent in the fully inflated airbag lies in the plane or in a plane that is parallel to the ideal plane along which the front panel moves during inflation. The plane of said tether may be inclined with respect to the said ideal (horizontal) plane by an angle comprised between +/- 25°, preferably between +/- 20°, most preferably between +/- 10°.

In an embodiment, the tether extending between the first and second attachment sites of the fully inflated airbag, lies along two angled lines respectively extending from said first attachment site to the attachment point of said second tether to said first tether, and from said second attachment site to said attachment point of said second tether to said first tether.

In an embodiment, the present invention provides a safety restraint system comprising the airbag for restraining both an in-position and an out-of-position vehicle occupant of the present invention and an inflator for providing inflation fluid for inflating the airbag.

In a preferred embodiment of the invention, the inflator is a single-stage inflator.

Accordingly, the present invention provides technical effects not achieved by the airbags and restraint systems of the known prior art. In particular, the airbag of the present invention is suitable for efficiently protecting both in-position and out-of-position vehicle occupants, with particular reference to an out-of-position vehicle occupant having head between airbag and instrument panel (overshoot situation). In addition, the present invention also allows employing a single-stage inflator, which results in the reduction of manufacturing costs of the safety restraint system and in providing cheaper airbag modules.

The airbag of the present invention is disclosed herein with reference to a frontal airbag, such as a driver airbag and a passenger airbag, however, it is clearly evident for a skilled person that it can be used with the same advantageous effects also in other types of airbags, such as side airbags, curtain airbags, front center airbags and even in knee airbags, exploiting the vertical distance between two attachment points of the first (vertical) tether for triggering the adaptive vent.

### BRIEF DESCRIPTION OF THE DRAWINGS

The foregoing and other features and aspects of the present invention will become more apparent from the following description of the preferred embodiment illustrated in the accompanying drawings, wherein:
Figure 1 shows a computer generated image (or CAD drawing) of a lateral view of a fully inflated frontal airbag according to the known prior art.
Figure 2 is a schematic cross-sectional view of an airbag according to a first embodiment of the present invention showing the deployment of an airbag in case of an out-of-position vehicle occupant in overshoot situation.
Figure 3 is a schematic cross-sectional view of an airbag according to the present invention showing the deployment of the airbag in case of an out-of-position vehicle occupant with head on instrument panel.
Figure 4 is a schematic cross-sectional view of a fully deployed airbag according to the present invention.
Figure 5 shows a computer generated image (or CAD drawing) of a lateral view of a fully deployed frontal airbag according to the present invention, wherein the direction of internal pressure forces of the inflated airbag are shown by means of arrows.
Figure 6 is a schematic view of the airbag inflated between the instrument panel and windshield in accordance with the present invention showing a 6 year old child in out-of-position, wherein the inflating airbag does not shoot over child's head.
Figure 7 is a schematic view of the airbag inflated between the instrument panel and windshield in accordance with the present invention showing a dummy of a 6 year old child in out-of-position with head on instrument panel, wherein the inflating airbag shoots over child's head.

### DETAILED DESCRIPTION OF THE INVENTION

Figure 1 is a schematic cross sectional, lateral, view of a fully inflated passenger frontal airbag according to the known prior art. Most prior art smart vents use the horizontal distance 1 or the passenger directed surface PS (front panel portion of the airbag cushion) to trigger the closure of the vent. Such a prior art airbag does not provide protection in the trajectory of the inflating airbag that is over passenger's head in out-of-position condition with head on instrument panel 6 (overshoot situation) as shown in fig.1. The known airbags do not sense an overshoot situation thus the airbag cushion continues deploying upon reaching its fully deployed condition when the vent opening will be closed. During deployment of a known airbag cushion as well as after reaching its fully deployed condition, the airbag exercises loading pressure on the passenger's head that will be further pressed against the instrument panel 6 and wrapped by the inflating airbag 10.

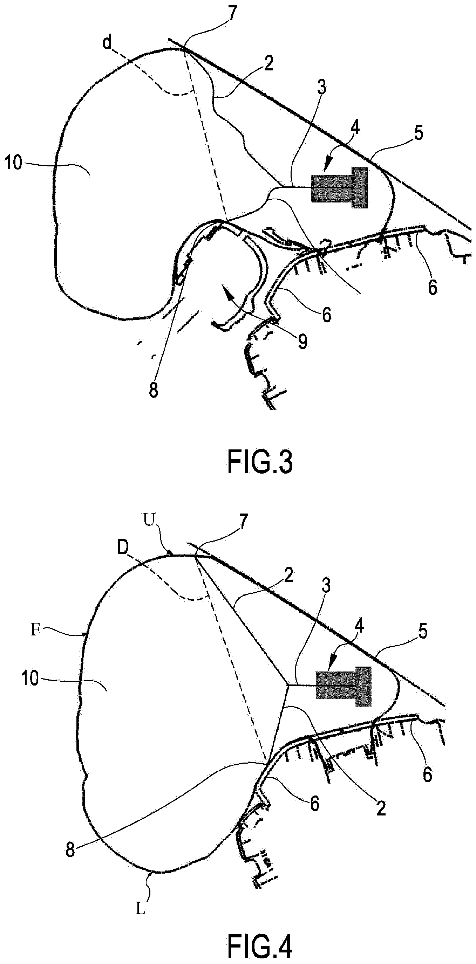

Figure 2 is a schematic cross-sectional view of an airbag 10 according to the first embodiment of the present invention. One end portion of the tether 2 is attached to the upper side portion of the airbag cushion 7, e.g. by means of stitches or any other appropriate means, and the tether 2 is guided through a loop 11, which is fixed to the lower side portion of the airbag cushion 10 at the second attachment site 8, to the passive adaptive vent 4. The second end portion of the tether 2 is fixed to the passive adaptive vent 4, in particular to the vent cover or to the vent flap, by any known means, such as by stitches or any other appropriate means. Since the passenger is in an overshoot situation, i.e. passenger's head is between the airbag cushion and the instrument panel, the tether 2 is slack and the distance d between the first and second attachment sites 7, 8 is shorter than the maximum distance D obtained in case of in-position condition deployment, wherein the airbag is fully deployed and the tether 2 is taut (shown in Figure 4).

Although, Figure 2 shows one end portion of the tether fixed to the upper side portion of the cushion, it is evident for a person skilled in the art that said end portion of the tether can also be fixed to the lower side portion of the cushion membrane 10 obtaining the same advantageous effects of the present invention. In this latter case, the loop 11 will be fixed at the upper side portion of the airbag cushion and the other end potion of the tether 2 will be fixed to the passive adaptive vent cover 4. During deployment of the airbag the distance d between the first and second attachment points 7, 8 triggers the closure of the passive adaptive vent. Since the vehicle occupant 9 is in an overshoot situation (out-of-position condition), the required distance between points 7 and 8 is not reached and vent 4 remains open and the airbag will not be fully deployed.

Figure 3 is a schematic cross-sectional view of an airbag 10 according to another embodiment of the present invention, making use of two connected tethers 2 and 3, showing the deployment of the airbag in case of an out-of-position vehicle occupant 9 with head on instrument panel 6. At the beginning of the inflation of the airbag 10, the adaptive vent 4 is open, i.e. the vent aperture is not covered by the vent cover or by the vent flap. Since the vehicle occupant is in out-of-position condition and the head of the occupant 9 is on the instrument panel 6, there is an overshoot situation for the occupant 9 and, as a result, there is a reduced distance d between the first and second attachment points 7, 8 of the first tether 2. At least tether 2, usually both tethers 2, 3, is not taut and vent 4 remains open, resulting in the gas being vented from the airbag 10. This overshoot situation is sensed or revealed by the shortened vertical distance d between both attachment points 7, 8 of the first tether 2 with respect to the maximum distance D achieved with a fully deployed airbag (as shown in Figure 4). The airbag is not able to be fully deployed thus the pressure load on the passenger is significantly reduced as is reduced also injury risk.

The airbag of fig. 3 is shown fully deployed in Figure 4; in the fully deployed condition, the vertical distance D between the two attachment points 7, 8 of first tether 2 (vertical tether) reaches its maximum. This situation is achieved with a vehicle occupant in an in-position condition. The upper side portion of the airbag 10 is positioned on the windshield 5 and the lower side portion of the airbag cushion 10 is on the instrument panel 6. The tethers 2, 3 are taut and the first tether 2 is tightened between the two attachment sites 7, 8 and it can pull the second tether 3 which is sewn or otherwise attached to the vent cover (or vent flap) of the adaptive vent 4. As a result, the vent 4 is closed and the airbag is filled with the required internal pressure. The vertical distance D between the two attachment sites 7, 8 of the first tether 2 reaches its maximum value.

During airbag deployment tensile forces are generated in the tethers 2, 3 as well as on the internal surface of the airbag cushion due to the gas pressure build up in said cushion. As a result, the tethers 2, 3 are pulled by the inflating airbag cushion that is inflated to reach a position at the windshield 5 and, respectively, at the instrument panel 6. Therefore the distance between the two attachment sites 7, 8 of the first tether 2 increases. The internal pulling forces generated by the increasing pressure within the airbag cushion are indicated in Figure 5 by means of arrows. Especially, the forces generated by the inflation gas try to inflate the airbag cushion in a fully deployed state, whereas in said condition the inflating airbag pulls the tethers 2, 3 to be taut.

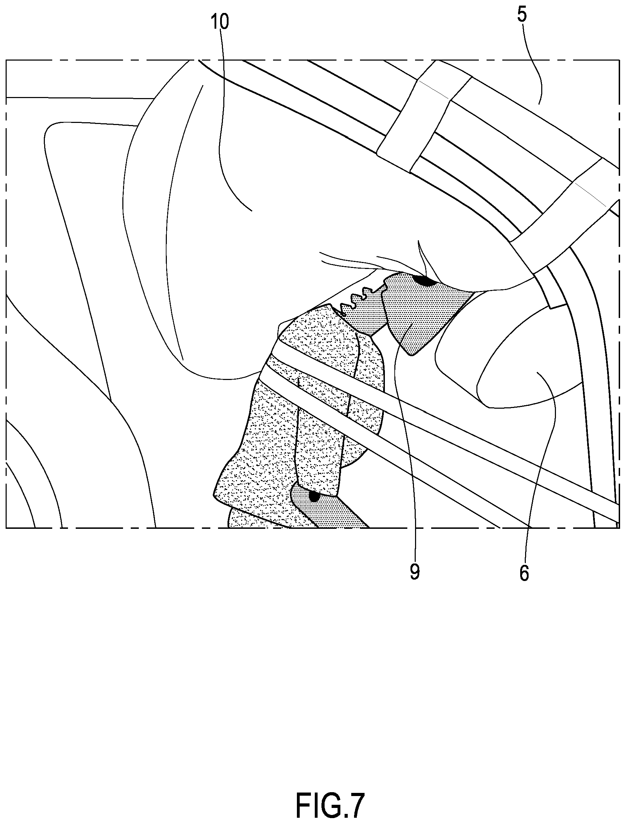

Each of Figures 6 and 7 is a schematic view of the airbag inflated between the instrument panel and windshield in accordance with the present invention. Figure 6 shows the inflated airbag protecting a 6 years old child (as a dummy) in out-of-position condition, while Figure 7 shows the partially inflated airbag of the present invention protecting a six years old child (dummy) in an overshooting condition, i.e. having his head between the airbag and the instrument panel. In particular, Figure 6 shows that the head of the child in out-of-position condition is protected by the partially inflated airbag due to the mitigation of the kinetic energy generated in the airbag during its inflation process. The shooting over the child's head in Figure 7 is similarly protected by the softer airbag cushion with respect to a fully inflated one, due to the reduced internal pressure within the airbag achieved by a prolonged venting of the gas through the open adaptive vent 4 by means of the present invention arrangement.

In other words, when the airbag cushion 10 is in a fully deployed condition, the distance D between said upper attachment site 7 of the tether 2 and said lower attachment site location 8 results in the second tether 3 being pulled by said first tether 2 towards said front panel F of the airbag; because the second tether 3 is pulled, it moves a flap or an equivalent means configured to close vent 4, so as to bring the vent in a closed condition, whereby the gas is retained in the cushion.

As visible in the figures, the tether 2 extending between the first and second attachment sites 7, 8 of the fully inflated airbag, lies along two angled lines respectfully extending from said first attachment site 7 to the attachment point of said second tether 3 to said first tether 2, and from said second attachment site 8 to said attachment point of said second tether 3 to said first tether 2. In the shown configuration, the tether 3 extending between the second attachment site 8 and an attachment point to the passive adaptive vent 4 lies in a plane that is parallel or substantially to a horizontal plane of a vehicle (not shown) that includes the airbag.

Another object of the invention is a vehicle including an air bag as above discussed.

With respect to the known prior art airbags, the passive adaptive vent of the airbag of the present invention has a significantly improved sensitivity. Accordingly, the forces developed between the deploying airbag and the out-of-position occupant are significantly reduced resulting in a reduced risk of airbag related injuries, i.e. in an improved protection of the occupant's head, neck, chest, abdominal and legs.

## Claims

1. An airbag for restraining a vehicle occupant, the airbag comprising an airbag cushion, at least one passive adaptive vent (4) and at least one tether (2, 3), said cushion (10) has an upper side portion (U), a lower side portion (L) and a front side portion (F) corresponding to the front panel portion of the airbag, facing the vehicle occupant, in the inflated state, said tether (2,3) is attached to the airbag cushion (10) and to the passive adaptive vent (4), wherein the tether (2) is attached to the airbag cushion (10) by means of a first attachment site (7) to the upper side portion (U) of the airbag cushion (10) and by means of a second attachment site (8) to the lower side portion (L) of the cushion.

2. The airbag of claim 1, wherein the tether (2,3) is attached to a vent cover or a vent flap of the passive adaptive vent (4).

3. The airbag of claim 1 or 2, wherein the tether (2) is guided through a loop (11) fixed at the first or second attachment site.

4. The airbag according to claim 1 or 2, comprising an airbag cushion, at least one passive adaptive vent (4) and at least two tethers (2, 3), each tether (2,3) has a first and an opposing second end portions, a first tether (2) is attached to the airbag cushion (10) and a second tether (3) is attached to said first tether (2) and to the passive adaptive vent (4), wherein said first tether (2) has a first attachment site (7) to the upper side (U) of the airbag cushion (10) and a second attachment site (8) to the lower side (L) of the airbag cushion (10), wherein the first end portion of the second tether (2) is attached to a point (7,8) along the length of the first tether (2) and the second end portion of the second tether (2) is attached to the passive adaptive vent (4).

5. The airbag of claim 4, wherein the second tether (2) is attached to a vent cover or a vent flap of said passive adaptive vent (4).

6. The airbag of any of claims 1-5, wherein the state of the passive adaptive vent (4) is triggered by the distance (d, D) between the first and second attachment sites (7, 8) of the tether (2).

7. The airbag of any claim 1 to 6, wherein in a fully deployed airbag cushion, the distance (D) between said upper attachment site (7) of the tether and said lower attachment site location (8) results in said second tether (3) being pulled by said first tether (2) towards said front panel (F) of the airbag whereby said second tether (3) closes said vent (4).

8. The airbag of claim 7, wherein the tether (2) extending between the first and second attachment sites (7, 8) of the fully inflated airbag, lies along two angled lines respectively extending from said first attachment site (7) to the attachment point of said second tether (3) to said first tether (2), and from said second attachment site (8) to said attachment point of said second tether (3) to said first tether (2).

9. The airbag of any of claims 1-8, wherein the tether (3) extending between the second attachment site (8) and an attachment point to the passive adaptive vent (4) lies in a plane that is parallel or substantially parallel to a horizontal plane of a vehicle that includes said airbag.

10. The airbag of any of claims 1-9, wherein the state of the adaptive vent (4) is triggered by the distance between the upper windscreen (5) and the instrument panel (6) occupied by the inflating/inflated airbag cushion (10).

11. A safety restraint system for a vehicle occupant, comprising an inflator and an airbag according to any of claims 1-10.

12. The safety restraint system of claim 11, wherein the inflator is a single-stage inflator.

13. A vehicle including an airbag according to any claim 1 to 10.
